# EUROPÄISCHE PATENTSCHRIFT

(11) **EP 0 640 190 B1**
(45) Veröffentlichungstag und Bekanntmachung des Hinweises auf die Patenterteilung: **20.03.1996**
(21) Anmeldenummer: 93909789.5
(22) Anmeldetag: 19.05.1993
(51) Int. Cl.: F16C 39/06

(54) **MAGNETLAGERREGLER**
MAGNETIC BEARING REGULATOR
REGULATEUR DE PALIER MAGNETIQUE

(30) Priorität: 19.05.1992 DE 4216481
(43) Veröffentlichungstag der Anmeldung: 01.03.1995
(73) Patentinhaber: FORSCHUNGSZENTRUM JÜLICH GMBH, D-52425 Jülich (DE)
(72) Erfinder: RUBNER, Wolfgang, D-52154 Herzogenrath (DE); LINDENAU, Bernd, D-52425 Jülich (DE)
(74) Vertreter: Metz, Siegfried
(86) Internationale Anmeldenummer: DE9300451
(87) Internationale Veröffentlichungsnummer: WO9323683

(56) Entgegenhaltungen:
- DE-A- 3 120 691
- FR-A- 2 322 294
- PATENT ABSTRACTS OF JAPAN vol 14, no 460 (M-1032) 4 Oktober 1990 ;& JP A 02 184205 (SEIKO SEIKI) 18 July 1990.

## Beschreibung

Die Erfindung betrifft einen Magnetlagerregler zur stabilen Lagerung eines berührungslos im Magnetfeld eines Stators gelagerten Körpers, wobei magnetisierbare Komponenten im Stator mit magnetisierbaren Komponenten des Körpers zusammenwirken. Als Lagerelement dienen zumindest zwei in Reihe geschaltete elektrische Spulen, die als Spulenpaar gleichzeitig als Positionssensor und als elektromagnetisches Stellglied wirken, wobei das als Vormagnetisierung bezeichnete, auf den Körper einwirkende Magnetfeld des Stators parallel zur Magnetisierungsrichtung der Spulen verläuft.

Magnetlager zur berührungslosen Lagerung von Körpern werden beispielsweise in G. Schweitzer (Editor), "Magnetic Bearings", Proceedings of the First Int. Symp. ETH-Zürich, Schweiz, 1988 beschrieben. Für Rotorwellen, aber auch für im magnetischen Feld schwebende Meßkörper sind Magnetlager aus DE-C-24 44 099 und DEC-38 08 331 bekannt. Die Magnetlager weisen Permanentmagnete auf, in deren Magnetfeld der zu lagernde Körper, der seinerseits magnetische oder magnetisierbare Teile besitzt, eingebracht wird. Zur Lagestabiisierung dienen elektrische Regler, deren Ausgangssignale von elektrischen Spulen erzeugte Magnetfelder verändern. Vom Regler wird die zwischen den magnetisierbaren Magnetlagerkomponenten herrschende magnetische Feldstärke entsprechend dem Ausgangssignal eines Positionssensors beeinflußt, der den bestehenden Abstand zwischen berührungslos gelagertem Körper und magnetischem Stator mißt.

Aus DE-A-25 37 597 ist ein die Merkmale des Oberbegriffs des Anspruchs 1 aufweisendes elektromagnetisches Lagerelement für zwei Freiheitsgrade hinsichtlich der Bewegung des gelagerten Rotors mit in Reihe geschalteten Spulenpaaren bekannt, die sowohl als Positionssensor als auch als elektrisches Stellglied dienen. Bei dieser Anordnung befinden sich alle Einzelspulen auf einem gemeinsamen Kern, sind also magnetisch gekoppelt. Bei einem solchen Lagerelement gibt es erhebliche elektromagnetische Beeinflussungen der Sensorströme durch die Lagerströme und umgekehrt und das in beiden Freiheitsgraden. Nur durch erheblichen Schaltungsaufwand wie Mehrfachanordnungen von Spulen für jeweils einen Freiheitsgrad, durch Spulenunterteilungen bzw. Anzapfungen und eine entsprechende elektrische Verschaltung können diese unerwünschten Beeinflussungen gemindert werden.

In einer nicht vorveröffentlichten deutschen Patentanmeldung P 42 10 741.5 (PT 1.1126) ist zur Verringerung von Magnetlagerkomponenten eine Hochfrequenzmeßbrückenschaltung beschrieben, bei der bei einem permantentmagnetischen Magnet lager elektrische Spulen in gleicher Weise wie bei DE-A-25 37 597 zur Regelung der Mittellage des berührungslos gelagerten Körpers zugleich als Positionssensor und als elektromagnetisches Stellglied dienen.

Aufgabe der Erfindung ist es, einen Regler für ein Magnetlager mit geringer Anzahl von Reglerkomponenten zu schaffen, der bei einfacher und kostengünstiger Gestaltung eine hohe Betriebssicherheit aufweist.

Diese Aufgabe wird gemäß der Erfingung durch die Merkmale des Anspruchs 1 gelöst, wobei ansgehend von einem Magnetlagerergler gemäß dem Obergegriff des Anspruchs 1 einer der beiden Verstärker das invertierte Ausgangssignal des anderen Verstärkers liefert. Am Eingang der Verstärker liegt in bekannter Weise das Hochfrequenzsignal des Oszillators, vorzugsweise ein sinusförmiges Hochfrequenzsignal an, das über die beiden Verstärker in das Spulenpaar eingespeist und zwischen den beiden Spulen über einen Hochpaßfilter von einem phasenempfindlichen Gleichrichter (Synchrongleichrichter) abgegriffen wird, der mit dem Hochfrequenzsignal des Oszillators getaktet wird. Der phasenempfindliche Gleichrichter ist am elektrischen "Mittelpunkt" zwischen den beiden Spulen angeschlossen, in diesem Punkte addieren sich die beiden in die Spulen eingespeisten invertierten Hochfrequenzsignale bei gleicher Spuleninduktivität zu Null. Verschiebt sich aber der im Magnetfeld gelagerte Körper zwischen dem Spulenpaar, so bewirkt dies eine Induktivitätsveränderung im Spulenpaar und damit eine wechselspannungsmäßige Potentialverschiebung im vorgenannten Mittelpunkt zwischen den Spulen. Das Spulenpaar wirkt auf diese Weise als Positionssensor. Die Potentialverschiebung wird im phasenempfindlichen Gleichrichter in ein entsprechend der Bewegungsrichtung des Körpers gepoltes, wegproportionales Steuersignal umgesetzt. Das Steuersignal wird über das Reglernetzwerk den Verstärkern zugeführt, die ihrerseits das Spulenpaar jetzt als elektromagnetisches Stellglied beaufschlagen und somit den Regelkreis schließen. Der durch das Spulenpaar fließende Ausgangsstrom der beiden Verstärker erzeugt eine von der jeweiligen Position des zu lagernden Körpers abhängige Magnetfeldveränderung, wobei das Magnetfeld so ausgerichtet wird, daß der Körper in seiner Soll-Lage stabilisiert wird. In dem Spulenpaar wird somit das Hochfrequenzsignal zur Lageabtastung dem wegund richtungsproportionalen Gleichstrom, der als Stellsignal wirkt, überlagert.

Zweckmäßig werden als Verstärker invertierende Verstärker verwendet, wobei der Eingang des einen der beiden Verstärker mit dem Ausgang des anderen Verstärkers verbunden ist (vergl. Patentanspruch 2). Zur Abtrennung des niederfrequenten Stellsignals vom hochfrequenten Abtastsignal ist nach Patentanspruch 3 zwischen Ausgang des phasenempfindlichen Gleichrichters und dem Eingang des Regelnetzwerks ein Tiefpaßfilter zwischengeschaltet.

Zur Stabilisierung eines magnetgelagerten Körpers in mehreren Freiheitsgraden seiner Bewegung sind nach Patentanspruch 4 dem vorbeschriebenen ersten Spulenpaar weitere Spulenpaare hinzuzufügen, wobei für jedes Spulenpaar ein Regelkreis mit einer Schaltungsanordnung der in den Patentansprüchen 1 bis 3 angegebenen Art verwendet wird und für alle Regelkreise gemeinsam ein Hochfrequenzoszillator benutzt werden kann.

Nach Patentanspruch 5 werden zur Radiallagerung eines Rotors zwei Spulenpaare, die magnetisch entkoppelt sind und deren Spulen jeweils in einer Radialebene mit Abstand vom Körper auf entgegengesetzten Körperseiten angeordnet sind, in um 90° gegeneinander versetzter Anordnung in der Weise miteinander verschaltet, daß jedes Spulenpaar in seiner Eigenschaft als Positionssensor zur Erzeugung des Stellsignals für das andere Spulenpaar in dessen Eigenschaft als Stellglied wirkt.

Die Erfindung wird nachfolgend anhand von Ausführungsbeispielen näher erläutert. Die Zeichnung zeigt im einzelnen:
- Figur 1: einen Magnetlagerregler für einen magnetisch gelagerten Körper mit einem Spulenpaar mit radial im Magnetfeld angeordneten Spulen;
- Figur 2: Magnetlagerregler mit zwei Spulenpaaren mit in einer Radialebene um den Körper angeordneten Spulen;
- Figur 3: Wirkung eines positiven oder negativen Steuerstroms auf die permanentmagnetische Vormagnetisierung.

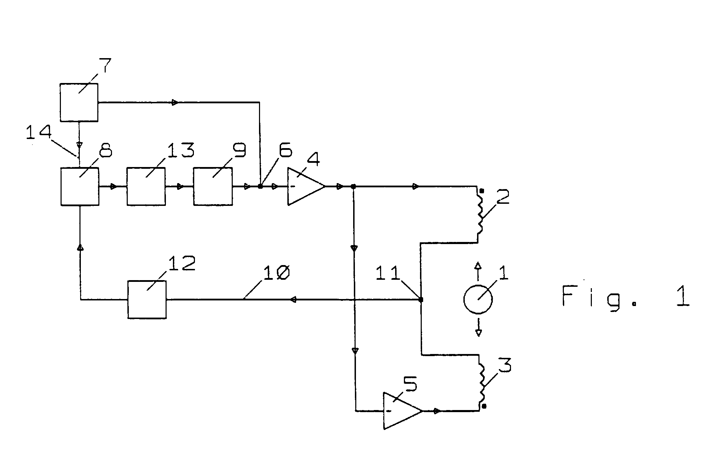

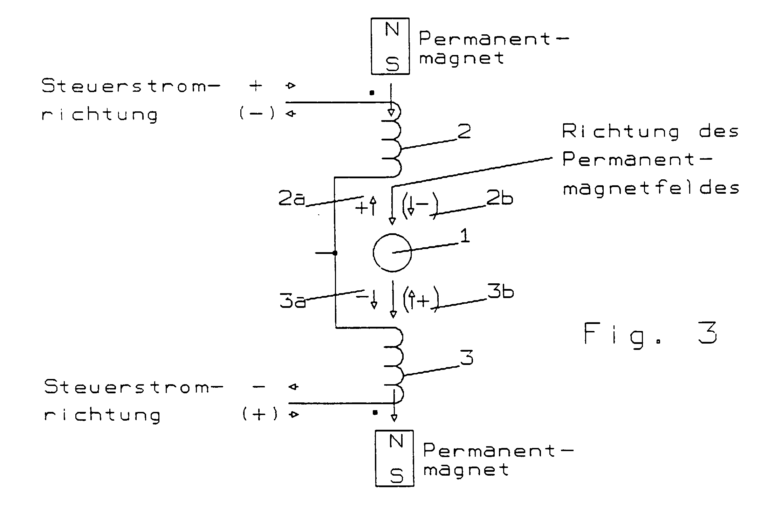

In Figur 1 ist ein Magnetlagerregler für einen magnetisch gelagerten Körper 1 wiedergegeben. Der Körper ist innerhalb eines Magnetfeldes eines magnetisierbare Komponenten aufweisenden Stators berührungslos gelagert. Die Magnetfeldrichtung des Magnetfeldes, die sog. Vormagnetisierung MV, ist in Figur 3 wiedergegeben. Der Stator mit seinen das Magnetfeld erzeugenden magnetisierbaren Komponenten sowie die magnetisierbaren Komponenten des Körpers 1 sind in der Zeichnung nicht dargestellt. Dargestellt sind alle Komponenten des Magnetlagerreglers.

Zur Beeinflussung der magnetischen Feldstärke des Magnetfeldes dienen beim Magnetlagerregler nach Figur 1 zwei Spulen 2, 3, die in einer Radialebene um den Körper 1 in axialer Richtung und auf entgegengesetzten Seiten des Körpers angeordnet sind. Die Spulen 2, 3 sind als Spulenpaar in Reihe geschaltet und mit ihren äußeren Enden, die im Ausführungsbeispiel jeweils der Spulenanfang sind (der Spulenanfang ist in der Zeichnung durch ein ausgefülltes Quadrat gekennzeichnet), an Ausgängen von zwei Verstärkern 4, 5 angeschlossen, wobei im Ausführungsbeispiel für beide Verstärker invertierende Verstärker eingesetzt sind. Die beiden Verstärker 4, 5 sind hintereinandergeschaltet, so daß der Verstärker 5 das invertierte Ausgangssignal des Verstärkers 4 liefert.

Das Spulenpaar wird als elektromagnetisches Stellglied von weg- und richtungsproportionalem Gleichstrom durchflossen, die in Figur 3 von den Spulen erzeugte Magnetfeldrichtung ist durch Pfeile 2a, 3a bzw. bei umgekehrter Steuerstromrichtung durch Pfeile 2b, 3b dargestellt. Die Spulen 2, 3 sind somit elektrisch in Reihe angeordnet, magnetisch jedoch entgegengesetzt gerichtet, wobei die Magnetfeldrichtungen der Spulen in beiden Steuerstromrichtungen parallel zur Vormagnetisierung MV verlaufen.

Das Spulenpaar 2, 3 ist gleichzeitig als Sensorspulenpaar mit hochfrequenter Abtastspannung beaufschlagt. Hierzu sind am Eingang 6 des Verstärkers 4 ein Hochfrequenzoszillator 7 sowie ein einem phasenempfindlichen Gleichrichter 8 nachgeschaltetes Reglernetzwerk 9 angeschlossen. Der Eingang des Gleichrichters 8 ist über eine elektrische Leitung 10 mit einem Meßpunkt 11, dem elektrischen "Mittelpunkt" zwischen den beiden Spulen 2, 3 verbunden. Vor dem Eingang zum Gleichrichter 8 befindet sich noch ein Hochpaßfilter 12, um am Gleichrichtereingang ein für die Position des im Magnetfeld gelagerten Körpers eindeutiges Hochfrequenz-Differenzsignal zu erhalten.

Im Ausführungsbeispiel ist zwischen phasenempfindlichen Gleichrichter 8 und Reglernetzwerk 9 ein Tiefpaßfilter 13 zur Glättung des lageproportionalen Steuersignals eingesetzt, das über die Spulen 2, 3 zur elektromagnetischen Stabilisierung der Soll-Lage des Körpers 1 dient. Zur Ermittlung der Abweichungsrichtung des schwebenden Körpers aus seiner Soll-Lage wird der phasenempfindliche Gleichrichter 8 vom Hochfrequenzoszillator 7 getaktet. Hierzu ist der Ausgang des Oszillators 7 neben seinem Anschluß am Eingang 6 des Verstärkers 4 über einen Leitungsstrang 14 parallel auch mit dem phasenempfindlichen Gleichrichter 8 verbunden.

Das vom phasenempfindlichen Gleichrichter 8 erzeugte Steuersignal zur Regelung der Soll-Lage des Körpers hängt von der Differenz der sich bei Bewegung des Körpers im Magnetfeld ändernden Spulenimpedanzen der Spulen 2, 3 ab. Die Spulenimpedanzen ändern sich analog zur Position des im Magnetlager schwebenden Körpers 1. Bei einer Abweichung aus der Soll-Lage entsteht zwischen den Spulen 2, 3 im Meßpunkt 11 ein der Abweichung proportionales elektrisches Signal, das nach Unterdrückung niederfrequenter Signalanteile durch dessen Hochpaßfilter 12 im Gleichrichter 8 mittels des aufgeschalteten Hochfrequenzsignals des Oszillators 7 so aufbereitet wird, daß Betrag und Richtung der Abweichung aus der Soll-Lage erfaßt sind. Ein entsprechendes Ausgangssignal des Gleichrichters 8 wird nach Durchgang durch das Tiefpaßfilter 13 dann dem Reglernetzwerk 9 aufgeschaltet, das schließlich den Verstärker 4 so steuert, daß dessen Ausgangsstrom sowie der Ausgangsstrom des Verstärkers 5 über die Spulen 2, 3 das Magnetfeld zwischen Körper 1 und Stator derart verändert, daß der Körper 1 in seine Soll-Lage zurückgeführt wird.

In der Soll-Lage des Körpers addieren sich die invertierten Hochfrequenzsignale bei gleicher Spuleninduktivität im Meßpunkt 11 zu Null. Bei einer Lageänderung aus dieser Soll-Lage heraus bewirkt der Körper 1 - wie bereits oben angegeben - eine Induktivitätsänderung im Spulenpaar und damit eine wechselspannungsmäßige Potentialverschiebung im Meßpunkt 11, welche von dem Gleichrichter 8 in ein, entsprechend der Bewegungsrichtung gepoltes, wegproportionales Spannungssignal umgesetzt wird. Dieses wird über das Tiefpaßfilter 13 mit nachfolgendem Reglernetzwerk 9 wieder dem Verstärker 4 zugeführt, so daß der Regelkreis geschlossen wird. Der das Spulenpaar 2, 3 durchfließende Ausgangsstrom der Verstärker 4, 5 erzeugt ein von der jeweiligen Position des zu lagernden Körpers abhängiges Magnetfeld, welches jeweils so beeinflußt wird, daß sich die Lage des Körpers 1 in seiner Sollstellung stabilisiert, wobei das Hochfrequenzsignal zur Lageabtastung dem weg- und richtungsproportionalen Gleichstrom, d.h. der Stellgröße überlagert bleibt.

Als Hochfrequenzsignal wird vorzugsweise ein sinusförmiges Hochfrequenzsignal vom Oszillator 7 erzeugt. Das Reglernetzwerk 9 weist zweckmäßig eine PD-Charakteristik auf.

Die beschriebene Schaltungsanordnung eignet sich auch zur mehrachsigen Lagestabilisierung magnetisch gelagerter Körper. Für jeden Bewegungsfreiheitsgrad ist dann jeweils ein gesonderter Magnetlagerregler mit je einem Spulenpaar und entsprechender Vormagnetisierung erforderlich, wobei es möglich ist, zur Erzeugung der Abtastspannung für alle Magnetlagerregler nur einen einzigen Hochfrequenzoszillator zu verwenden.

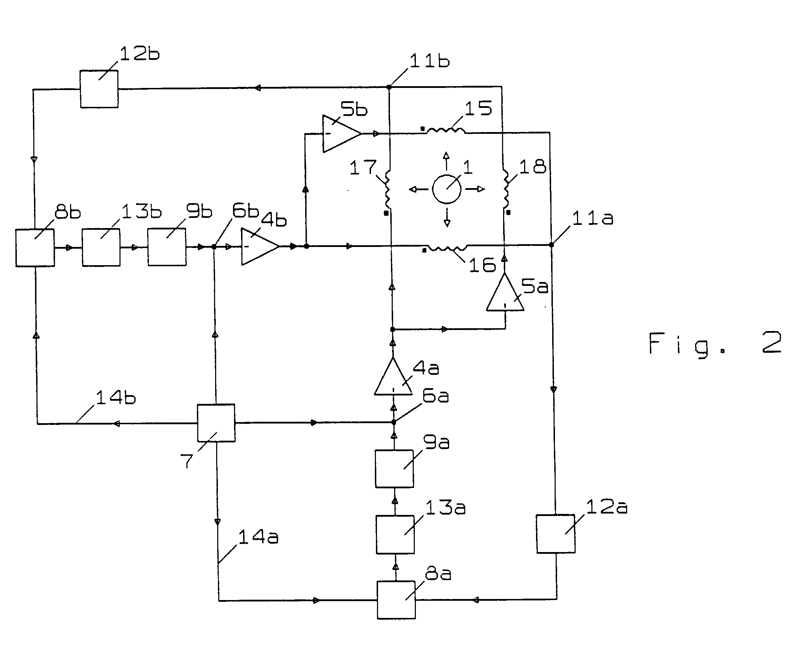

Eine weitere Anwendung des erfindungsgemäßen Magnetlagerreglers gibt Figur 2 wieder. Es handelt sich dabei um eine zweiachsige Magnetlagerregelung, welche vorzugsweise zur Regelung von magnetischen Radiallagern eingesetzt wird. Beim Magnetlagerregler nach Figur 2 sind Spulenpaare 15, 16 und 17, 18 jeweils um 90° gegeneinander versetzt angeordnet, sie umschließen den zu lagernden Körper 1 im Magnetfeld mit Abstand zum Körper und in einer Radialebene konzentrisch zu dessen Drehachse (im Ausführungsbeispiel nach Figur 1 sind die Spulen 2, 3 - wie bereits ausgeführt - radial zur Drehachse ausgerichtet). Die Spulen 15, 16 und 17, 18 sind magnetisch entkoppelt (z.B. weisen sie keinen gemeinsamen Spulenkern auf) und in gleicher Weise wie in Figur 1 als Spulenpaar in Reihe miteinander verschaltet. Die beiden dazu gehörenden Magnetlagerregler a und b weisen die gleichen elektrischen Bauelemente auf wie der Magnetlagerregler nach Figur 1. Die Bauelemente in Figur 2 sind deshalb mit gleichen Bezugszeichen wie die entsprechenden Bauelemente nach Figur 1 versehen, zur Unterscheidung wurden lediglich Buchstaben "a" und "b" hinzugefügt, zur Kennzeichnung der Bauelemente in jeweils einem der Magnetlagerregler.

Die Spulenpaare sind im Ausführungsbeispiel nach Figur 2 über die beiden Magnetlagerregler jeweils derart miteinander verbunden, daß jedes Spulenpaar in einer Koordinate als Stellglied und in der jeweils anderen Koordinate als Sensor arbeitet. Hierzu wird jeweils das Sensorsignal des einen Spulenpaares als Stellsignal des anderen Spulenpaares und umgekehrt verwendet, die Spulen 15, 16 wirken somit als Sensoren für die als Stellglied die Körperlage stabilisierenden Spulen 17, 18, während die Spulen 17, 18 als Sensoren für das den Spulen 15, 16 als Stellglied zuzuleitende Stellsignale maßgebend sind. Entsprechend ist am Meßpunkt lla zwischen den Spulen 15, 16 das dem phasenempfindlichen Gleichrichter 8a vorgeschaltete Hochpaßfilter 12a angeschlossen, und der Ausgang des Gleichrichters 8a führt über Tiefpaßfilter 13a und Reglernetzwerk 9a zum Eingang 6a des Verstärkers 4a, dessen Ausgang parallel einerseits mit der Spule 17, andererseits mit dem Eingang des invertierenden Verstärkers 5a verbunden ist, der das Signal für die Spule 18 liefert. Am Meßpunkt 11b zwischen den Spulen 17, 18 greift der Magnetlagerregler b an. Er ist in gleicher Weise wie der Magnetlagerregler a mit Hochpaßfilter 12b, phasenempfindlichen Gleichrichter 8b, Tiefpaßfilter 13b, Regelnetzwerk 9b und Verstärkern 4b, 5b ausgerüstet, wobei die Ausgänge der Verstärker 4b, 5b jetzt zu den Spulen 15, 16 führen und die Magnetlagerregler a, b somit zu einem geschlossenen Stromkreis miteinander verbinden. Im Ausführungsbeispiel werden zweckmäßig beide Magnetlagerregler vom gleichen Hochfrequenzoszillator 7 gespeist. Der Ausgang des Hochfrequenzoszillators ist hierzu parallel sowohl an den Eingängen 6a, 6b der Verstärker 4a, 4b angeschlossen, als auch zum Takten der phasenempfindlichen Gleichrichter 8a, 8b über die Leitungsstränge 14a, 14b mit beiden Gleichrichtern verbunden.

Diese Schaltungsanordnung nach Figur 2 kann vorzugsweise zur Lagerung beispielsweise zylindrischer Körper in zwei radialen Stützebenen eingesetzt werden. Selbstverständlich läßt sich diese Magnetlagerregelung als Lagestabilisierung eines magnetgelagerten Körpers in zwei seiner Bewegungsfreiheitsgrade zusätzlich beispielsweise auch mit einem Magnetlagerregler nach Figur 1 zur Lagestabilisierung des Körpers auch in einem dritten Bewegungsfreiheitsgrad verbinden. In Kombination mit der Schaltungsanordnung nach Figur 1 erhält man somit eine aktive dreiachsige magnetische Lagerung. Auch für eine solche Kombination eines Magnetlagerreglers ist nur ein Hochfrequenzoszillator erforderlich, der alle Magnetlagerregler gemeinsam beaufschlagt.

Für die Komponenten der beschriebenen Magnetlagerregler können handelsübliche integrierte Schaltungen verwendet werden, z.B. Leistungsverstärker zur Ansteuerung der Spulen, wie sie auch in Radioapparaten, z.B. Autoradios, eingesetzt sind. Für den Aufbau der Signalaufbereitung bietet sich die Verwendung von sog. LVDT-Signal-Konditionieren an, also Schaltungen zur Ansteuerung von linear variablen Differenzialtransformatoren. Diese Transformatoren sind auch als induktive Weggeber bekannt, die im wesentlichen einen integrierten Sinus-Oszillator und einen Synchrongleichrichter/Demodulator enthalten.

Figur 3 zeigt, wie in Verbindung mit den beiden Permanentmagneten, die der Vormagnetisierung dienen, ein positiver Steuerstrom bei der vorgegebenen Spulenanordnung eine Schwächung des Permanentmagnetfeldes im Bereich der Spule 2 bei gleichzeitiger Stärkung des Permanentmagnetfeldes im Bereich der Spule 3 bewirkt (Pfeile 2a, 3a für die von den Spulen erzeugte Magnetfeldrichtung). Ein negativer Steuerstrom, in Figur 3 in Klammern gesetzte Stromrichtungszeichen, bewirkt dagegen entgegengesetzt eine Stärkung des Permanentmagnetfeldes im Bereich der Spule 2 bei gleichzeitiger Schwächung des Permanentmagnetfeldes im Bereich der Spule 3 (Pfeile 2b, 3b für die von den Spulen erzeugte Magnetfeldrichtung).

## Patentansprüche

1. Magnetlagerregler zur stabilen Lagerung eines berührungslos im Magnetfeld eines Stators gelagerten Körpers (1), wobei magnetisierbare Komponenten im Stator mit magnetisierbaren Komponenten des Körpers zusammenwirken, mit zumindest zwei als
Lagerelemente in Reihe geschalteten elektrischen Spulen (2,3 ; 15,16 ; 17,18), die als Spulenpaar sowohl als Positions-sensor als auch als elektromagnetisches Stellglied dienen, wobei das als Vormagnetisierung bezeichnete Magnetfeld des Stators parallel zur Magnetisierungsrichtung der Spulen verläuft, wobei
das Spulenpaar (2, 3; 15, 16; 17, 18) elektrisch in Reihe geschaltet und magnetisch entgegensetzt angeordnet ist und mit seinen beiden äußeren Enden jeweils mit einem Ausgang eines Verstärkers (4, 5; 4a, 5a; 4b, 5b) verbunden ist, wobei der Regler einen Oszillator (7) zur Erzeugung eines hochfrequenten Sensorsignals aufweist, das zwischen den beiden Spulen des Spulenpaares (2,3;15,16;17,18) abgegriffen über einen Hochpaßfilter (12, 12a, 12b) einem Gleichrichter (8, 8a, 8b) zugeführt wird und der Ausgang des Gleichrichters mit den Verstärkern (4,5; 4a, 5a; 4b, 5b) verbunden ist, **dadurch gekennzeichnet**, daß einer der beiden Verstärker (5, 5a, 5b) das invertierte Ausgangssignal des anderen Verstärkers (4, 4a, 4b) liefert, daß am Eingang der Verstärker (4, 5; 4a, 5a; 4b, 5b) das Hochfrequenzsignal des Oszillators (7) anliegt, daß der Gleichrichter
ein phasenempfindlicher Gleichrichter (8, 8a, 8b) ist, der mit dem Hochfrequenzsignal des Oszillators (7) getaktet ist, und daß der Ausgang des Gleichrichters (8, 8a, 8b) über ein nachfolgendes Reglernetzwerk (9, 9a, 9b) mit den Verstärkern (4, 5; 4a, 5a; 4b, 5b) verbunden ist.

2. Magnetlagerregler nach Anspruch 1,
**dadurch gekennzeichnet**, daß als Verstärker (4, 5; 4a, 4b; 5b) zwei invertierende Verstärker eingesetzt sind, wobei der Eingang eines der beiden Verstärker (4, 4a, 4b) mit dem Ausgang des anderen Verstärkers (5, 5a, 5b) verbunden ist.

3. Magnetlagerregler nach Anspruch 1 oder 2,
**dadurch gekennzeichnet**, daß zwischen Ausgang des phasenempfindliche Gleichrichters (8, 8a, 8b) und Eingang des Reglernetzwerkes (9, 9a, 9b) ein Tiefpaßfilter (13, 13a, 13b) zwischengeschaltet ist.

4. Magnetlagerregler nach einem der vorhergehenden Ansprüche 1 bis 3,
**dadurch gekennzeichnet**, daß zur Stabilisierung mehrerer Freiheitsgrade mehrere Spulenpaare (15, 16; 17, 18) angeordnet sind, wobei für jedes Spulenpaar ein Regelkreis der vorgenannten eingesetzt ist.

5. Magnetlagerregler nach Anspruch 4,
**dadurch gekennzeichnet**, daß zwei Spulenpaare mit Spulen (15, 16; 17, 18), die magnetisch entkoppelt und in einer Radialebene des Körpers (1) mit Abstand zum Körper auf entgegengesetzten Körperseiten angeordnet sind, in um 90° gegeneinander versetzter Anordnung in der Weise miteinander verschaltet sind, daß jedes Spulenpaar (15, 16; 17, 18) jeweils in seiner Eigenschaft als Positionssensor für das andere Spulenpaar (17, 18; 15, 16) in dessen Eigenschaft als Stellglied wirkt.

## Claims

1. A magnetic bearing regulator for stable mounting of a body (1) which is borne free of contact in the magnetic field of a stator, and that magnetizable components in the stator co-act with magnetizable components of the body, comprising at least two electrical coils (2, 3; 15, 16; 17, 18) connected in series as bearing elements which as a pair of coils serve both as a position sensor and electromagnetic control element, and that the magnetic field of the stator described as pre-magnitization extends parallel to the direction of magnetization of the coils, and that the pair of coils (2, 3: 15, 16; 17, 18) is electrically connected in series and magnetically in opposition and with its two outer ends connected to a respective output of an amplifier (4, 5; 4a, 5a; 4b, 5b), and that the regulator comprises an oscillator (7) for generating a high-frequency sensor signal which is picked off between the two coils of the pair of coils (2, 3; 15, 16; 17, 18) and fed via a high-pass filter (12, 12a, 12b) to a rectifier (8, 8a, 8b), and the output of the rectifier is connected to the amplifiers (4, 5; 4a, 5a, 4b, 5b), **characterized in that** one of the two amplifiers (5, 5a, 5b) delivers the inverted output signal of the other amplifier (4, 4a, 4b), that the high-frequency signal of the oscillator (7) is applied to the input of the amplifier (4, 5; 4a, 5a; 4b, 5b), that the rectifier is a phase-sensitive rectifier (8, 8a, 8b) which is synchronized with the high-frequency signal of the oscillator (7), and that the output of the rectifier (8, 8a, 8b) is connected via a downstream regulating network (9, 9a, 9b) to the amplifiers (4, 5; 4a, 5a; 4b, 5b).

2. A magnetic bearing regulator according to Claim 1, **characterized in that** the amplifiers (4, 5; 4a, 4b; 5b) are two inverting amplifiers, and that the input of one of the two amplifiers (4, 4a, 4b) is connected to the output of the other amplifier (5, 5a, 5b).

3. A magnetic bearing regulator according to Claim 1 or 2, **characterized in that** a low-pass filter (13, 13a, 13b) is inserted between the output of the phase-sensitive rectifier (8, 8a, 8b) and the input of the regulating network (9, 9a, 9b).

4. A magnetic bearing regulator according to one of the above Claims 1 to 3, **characterized in that** a plurality of pairs of coils (15, 16; 17, 18) is arranged for the purpose of stabilizing a plurality of degrees of freedom, and that a regulating circuit of the above is provided for each pair of coils.

5. A magnetic bearing regulator according to Claim 4 **characterized in that** two pairs of coils with coils (15, 16; 17, 18), which are magnetically uncoupled and arranged in a radial plane of the body (1) at a distance from the body on opposite sides of the body, are connected 90° offset relative to each other in such a manner that each pair of coils (15, 16; 17, 18) acts respectively in its capacity as a position sensor for the other pair of coils (17, 18; 15, 16) in its capacity as a control element.

## Revendications

1. Régulateur de palier magnétique pour supporter de manière stable une pièce (1) montée sans contact dans le champ magnétique d'un stator, des éléments du stator qui peuvent être aimantés coopérant avec des éléments de la pièce qui peuvent être aimantés, comportant au moins en tant qu'élément de support deux bobines (2, 3; 15, 16; 17, 18) électriques en série qui agissent à la fois comme couple de bobines, en même temps comme capteur de position et comme organe de réglage électromagnétique, le champ magnétique du stator désigné comme pré-aimantation et s'étendant parallèlement à la direction d'aimantation des bobines, le couple (2, 3; 15, 16; 17, 18) de bobines étant monté en série du point de vue électrique et de manière opposée du point de vue magnétique et relié par ses deux extrémités extérieures respectivement aux sorties d'amplificateurs (4, 5; 4a, 5a; 4b, 5b), le régulateur comportant un oscillateur pour produire un signal de capteur à haute fréquence qui est pris entre les deux bobines du couple (2, 3; 15, 16; 17, 18) de bobines et envoyé, par l'intermédiaire d'un filtre (12, 12a, 12b) passe-haut à un redresseur (8, 8a, 8b), et la sortie du redresseur étant reliée aux amplificateurs (4, 5; 4a, 5a; 4b, 5b), caractérisé en ce que l'un (5, 5a, 5b) des deux amplificateurs fournit le signal de sortie inversé de l'autre amplificateur (4, 4a, 4b), en ce qu'il est présent à l'entrée des amplificateurs (4, 5; 4a, 5a; 4b, 5b) le signal de haute fréquence de l'oscillateur (7), en ce que le redresseur est un redresseur (8, 8a, 8b) sensible à la phase qui est cadencé par le signal de haute fréquence de l'oscillateur (7), et en ce que la sortie du redresseur (8, 8a, 8b) est reliée, par l'intermédiaire d'un circuit (9, 9a, 9b) régulateur suivant, aux amplificateurs (4, 5; 4a, 5a; 4b, 5b).

2. Régulateur de palier magnétique suivant la revendication 1, caractérisé en ce que les amplificateurs (4, 5; 4a, 5a; 4b, 5b) utilisés sont deux amplificateurs inverseurs, l'entrée de l'un des deux amplificateurs (4, 4a, 4b) étant reliée à la sortie de l'autre amplificateur (5, 5a, 5b).

3. Régulateur de palier magnétique suivant la revendication 1 ou 2, caractérisé en ce qu'il est interconnecté, entre la sortie du redresseur (8, 8a, 8b) sensible à la phase et l'entrée du circuit (9, 9a, 9b) régulateur, un filtre (13, 13a, 13b) passe-bas.

4. Régulateur de palier magnétique suivant l'une des revendications 1 à 3 précédentes, caractérisé en ce qu'il est prévu, pour la stabilisation dans plusieurs degrés de liberté, plusieurs couples (15, 16; 17, 18) de bobines, un circuit de réglage du genre susmentionné étant utilisé pour chaque couple de bobines.

5. Régulateur de palier suivant la revendication 4, caractérisé en ce que deux couples de bobines comportant des bobines (15, 16; 17, 18), qui sont découplées du point de vue magnétique et qui sont prévues dans un plan radial de la pièce sur des côtés opposés de la pièce, à distance de la pièce (1), sont reliés en étant décalés de 90° l'un par rapport à l'autre de façon que chaque couple (15, 16; 17, 18) de bobines agisse en sa qualité de capteur de position pour l'autre couple (15, 16; 17, 18) de bobines agissant en sa qualité d'organe de réglage.
